# EUROPÄISCHE PATENTSCHRIFT

(11) **EP 3 311 650 B1**
(45) Veröffentlichungstag und Bekanntmachung des Hinweises auf die Patenterteilung: **31.07.2019**
(21) Anmeldenummer: 17001646.3
(22) Anmeldetag: 06.10.2017
(51) Int. Cl.: A01D 78/10

(54) **HEUWERBUNGSMASCHINE MIT MODULARER ANBAUVORRICHTUNG**
HAYMAKING MACHINE WITH MODULAR HITCH DEVICE
MACHINE DE FENAISON POURVUE D'UN DISPOSITIF D'ATTELAGE MODULAIRE

(30) Priorität: 20.10.2016 DE 102016012522
(43) Veröffentlichungstag der Anmeldung: 25.04.2018
(73) Patentinhaber: Maschinenfabrik Bernard Krone GmbH & Co. KG, 48480 Spelle (DE)
(72) Erfinder: Afting, Andreas, 48488 Emsbüren (DE)

(56) Entgegenhaltungen:
- EP-A1- 0 370 304
- EP-A1- 1 095 555
- EP-A1- 1 670 306
- EP-A2- 2 433 483

## Beschreibung

Die Erfindung betrifft Heuwerbungsmaschinen, wie beispielsweise Schwader oder Zettwender, die mithilfe einer Anbauvorrichtung an das Heck einer Zugmaschine, genauer gesagt an deren Dreipunkt-Hubvorrichtung, gekoppelt und von der Zapfwelle der Zugmaschine angetrieben werden.

Derartige Heuwerbungsmaschinen sind aus dem Stand der Technik in verschiedenen Ausführungsformen bekannt, wie zum Beispiel aus der EP2433483A2, und werden zur Grünfutterernte eingesetzt. Dabei werden Zettwender zur beschleunigten Trocknung von geschnittenem Erntegut eingesetzt. Diese Maschinen werden über geschnittenes Erntegut transportiert. Dabei erfassen und verteilen sie das Erntegut in der Regel breitflächig auf dem Feld. Durch die hohen Drehgeschwindigkeit der Arbeitseinheiten, meistens als um eine vertikale Achse rotiernde Kreisel ausgeführt, wird das Erntegut häufig zusätzlich angeschlagen. Dadurch wird eine zügige Trocknung weiter unterstützt. Schwader hingegen führen das Erntegut auf dem Feld zu einfach aufnehmbaren Schwaden zusammen. Hierdurch wird eine weitere Bearbeitung vereinfacht, da Erntegut in einem Schwad effizienter geborgen werden kann, beispielsweise durch Feldhäcksler oder Ballenpressen, als wäre es breit über ein Feld verteilt. Es besteht dabei in der modernen Landwirtschaft bei den meisten Maschinengattungen das Bestreben, immer größere Arbeitsbreiten zu erreichen, um schneller und bei möglichst gleichbleibender Arbeitsqualität entsprechende Flächen zu bearbeiten. Dadurch ergeben sich besonders bei angebauten Maschinen Schwierigkeiten. Als angebaute Maschinen werden diejenigen Maschinen bezeichnet, die während des Transportes von einem Feld zum Nächsten alleine von der Zugmaschine getragen werden. Dies wird durch eine Dreipunkt-Hubeinrichtung, auch als Dreipunkt-Kraftheber bekannt, oder ähnliche moderne Hubwerke an landwirtschaftlichen Arbeitsmaschinen ermöglicht.

Bei diesen angebauten Maschinen haben sich die Hersteller oftmals einer besonderen Herausforderung zu stellen. Das Gewicht der Arbeitsmaschine im Verhältnis zum Gewicht der Zugmaschine beeinflusst die Arbeitssicherheit sowie die Handhabbarkeit eines solchen Gespanns entscheidend. Denn der resultierende Schwerpunkt der Zugmaschinen-Arbeitsmaschinen-Kombination kann zu Problemen führen. Dabei spielen auch gesetzliche Vorgaben eine Rolle. So ist zur gewährleistenden Lenkbarkeit der Zugmaschine bei Straßenfahrten eine Mindestbelastung der Frontachse vorgeschrieben. Diesem Umstand folgt die Schlussfolgerung, dass der vordere Teil der Zugmaschine als erster Hebel, die Hinterachse als Drehachse und die Arbeitsmaschine mit Dreipunkt-Hubeinrichtung als zweiter Hebel zu betrachten ist. Durch den Anbau einer schweren Arbeitsmaschine an die Dreipunkt-Hubeinrichtung der Zugmaschine wird die Frontachse also durch die resultierende Hebelkraft stark entlastet. Letztere ergibt sich dabei aus dem Gewicht der Arbeitsmaschine und dem Abstand zur Hinterachse. Um trotz dieser Problematik Arbeitsmaschinen, insbesondere mit größerer Arbeitsbreite auch für kleinere Zugmaschinen, wie alpine Schlepper anbieten zu können, gibt es verschiedene Möglichkeiten. Zunächst kann bei der Konstruktion über eine leichtere Bauweise nachgedacht werden. Jedoch weist diese Option den Nachteil hoher Kosten auf, die sich durch den Einsatz von Leichtbaumaterialien und möglicherweise der Entwicklung eines eigenen Maschinenkonzeptes ergeben. Darüber hinaus kann die Belastbarkeit der Maschinen aufgrund des Einsatzes von Bauteilen mit geringeren Materialstärken leiden. Eine findigere Option betrifft die Schwerpunktverlagerung von bekannten und zuverlässigen Arbeitsmaschinen hin zur Zugmaschine. Um eine geringere Frontachsentlastung bei größeren und schwereren, angebauten Arbeitsmaschinen zu gewährleisten, muss also dafür gesorgt werden, dass die durch den Abstand vom Schwerpunkt der Arbeitsmaschine zur Hinterachse der Zugmaschine resultierende Hebelkraft auf ein Minimum reduziert wird.

Bei diesem Lösungsansatz ist zu beachten, dass verschiedene Ausführungen der Dreipunkt-Hubeinrichtung und unterschiedlichste Bereifungen und Baugrößen der Zugmaschinen am Markt vorhanden sind. Um eine Heuwerbungsmaschine möglichst universell einsetzen zu können, wird bislang eine ausreichend lange Tragvorrichtung konzipiert. Durch diese lange Tragvorrichtung kann zwar zumeist erreicht werden, dass verschiedene Zugmaschinen die Arbeitsmaschine anbauen können. Jedoch wird bei kleineren Zugmaschinen oftmals ein ungünstig langer Hebelarm am Heck der Zugmaschine geschaffen, sodass die Frontachse zu sehr entlastet wird. Die dadurch verschlechterte Handhabung kann besonders in Hanglagen schnell eine unangenehme bis gefährliche Wirkung haben. Da der Schwerpunkt der Kombination weit nach hinten verschoben ist, lässt sich das Verhalten der Maschinenkombination bei Arbeiten in Hanglage schlechter vom Benutzer einschätzen. Darüber hinaus kommt es schnell zu einer Hangdrift, welcher der Benutzer durch Gegensteuern der Zugmaschine begegnen muss. Durch die Hangdrift und die Manöver des Benutzers lässt sich wiederum eine Beschädigung der Grasnarbe nicht vermeiden.

Aufgabe der Erfindung ist es folglich, eine Heuwerbungsmaschine anzubieten, die in der Lage ist, abhängig von der Größe der Zugmaschine, deren Bereifung und der Länge der Bauteile ihrer Dreipunkt-Hubeinrichtung einen optimalen Schwerpunkt der Zugmaschine zu erreichen, um zumindest gesetzliche Vorgaben zu erfüllen, sowie die Maschinenhandhabung, insbesondere bei Arbeiten am Hang, positiv zu beeinflussen und eine kosteneffiziente Produktion zu ermöglichen.

Erfüllt wird diese Aufgabe erfindungsgemäß durch eine Heuwerbungsmaschine gemäß dem Anspruch 1, wobei vorteilhafte Weiterbildungen aus den weiteren Patentansprüchen und den Ausführungsbeispielen hervorgehen.

Gemäß der Erfindung wird eine Heuwerbungsmaschine mit zumindest einer rotierend antreibbaren, an einem Maschinenrahmen gehalterten Arbeitseinheit mit daran befindlichen, Emtegut bearbeitenden Zinken, einer die Arbeitseinheit zumindest teilweise umgebenden Schutzeinrichtung, wenigstens einer Abstützvorrichtung zum Abstützen der zumindest einen Arbeitseinheit auf dem Boden und einer Anbauvorrichtung zur Verbindung mit einer Dreipunkt-Hubvorrichtung einer landwirtschaftlichen Zugmaschine vorgeschlagen, wobei die Heuwerbungsmaschine über wenigstens ein sich von der Anbauvorrichtung bis zum Maschinenrahmen erstreckendes, in und entgegen der Fahrtrichtung längenveränderliches Rahmenelement verfügt.

Die erfindungsgemäße Heuwerbungsmaschine zeichnet sich durch ihr längenveränderliches Rahmenelement aus. Bevorzugt wird dieses als eine mehrteilige Tragvorrichtung, deren Tragelemente derart ausgeführt sind, dass Sie als Schiene und Fassung arbeiten. Dabei wird vorzugsweise das Tragelement, das direkt mit der Arbeitseinheit oder mit dem Maschinenrahmen in Verbindung steht, als Fassung für das Tragelement ausgebildet, welches von der Anbauvorrichtung, wie einem Anbaubock, beispielsweise als Hohlprofil oder I-Profil ausgebildet, schienenartig in ein als Fassung ausgebildetes Tragelement eingeführt werden kann. Jetzt können die beiden Tragelemente der Tragvorrichtung durch lösbare Verbindungen miteinander verbunden werden. Als sinnvoll werden hier Mittel wie Schraubverbindungen oder Steckbolzen angesehen. Allerdings sind auch weitere Maßnahmen zur Fixierung und Positionssicherung denkbar. Dadurch kann vor der Benutzung der Arbeitsmaschine eine Anpassung an einen beliebigen Traktor erfolgen. In der Regel wird die Verbindung zwischen Anbauvorrichtung und Tragvorrichtung um eine vertikale Achse schwenkbar ausgeführt, um der Arbeitsmaschine ein besseres Nachlaufverhalten in der Arbeitsstellung zu ermöglichen. Damit die schwenkbewegliche Verbindung sich in Arbeitsstellung nicht unkontrolliert verhalten kann, ist der Einsatz einer Stabilisierungsvorrichtung vorgesehen. Entsprechend der eingestellten Länge der Tragvorrichtung kann auch die Stabilisierungsvorrichtung angepasst werden. Zur benutzerfreundlichen Anpassung wird vorgeschlagen, der Stabilisierungsvorrichtung dieselbe Anzahl an Einstellungen zu ermöglichen, wie es bei der Tragvorrichtung der Fall ist.

Sinnvoll erscheinen zur Anpassung der Stabilisierungselemente auch der Einsatz von Zwischenelementen, beispielsweise Zwischenhülsen oder -profile. Dadurch kann eine semi-permanente Einstellung erfolgen, die besonders dann ihren Nutzen erweist, wenn mehrere Schlepper zum Betreiben der Maschine zur Verfügung stehen. In der Regel wird allerdings nur eine Zugmaschine für den Einsatz vorgesehen. So kann zunächst eine Grundeinstellung für die dafür vorgesehene Zugmaschine eingestellt werden, indem die Stabilisierungselemente durch Zwischenstücke angepasst werden. Wird jetzt allerdings eine andere Zugmaschine eingesetzt, beispielsweise ersatzweise aus Wartungsgründen, können weitere Zwischenstücke eingesetzt werden oder gänzlich auf diese verzichtet werden.

Zusätzlich können Ausführungen der Heuwerbungsmaschine über verschiedene Anbringungsmöglichkeiten der eingesetzten Schutzvorrichtung verfügen, welche sich positiv auf den Abstand zwischen den Arbeitswerkzeugen und den Hinterrädern der Zugmaschine auswirken. Durch die besser angepasste Schutzvorrichtung kann der Maschinenschwerpunkt weiter in Richtung Zugmaschine verschoben werden. Bevorzugt wird dabei eine Ausführung, bei der sich ein Teil des Schutzrahmens von der Anbauvorrichtung zu den äußeren Bereichen der hinteren Bereifung der Zugmaschine erstreckt. Zur besseren Anpassung kann auch an dieser Stelle über eine in Fahrtrichtung längenveränderliche Ausführung nachgedacht werden.

Besonders komfortabel ist bei häufigem Wechsel der Zugmaschine eine Kombination von fremdkraftbetätigten Aktoren für die Tragvorrichtung sowie für die Stabilisierungsvorrichtung. Hierbei kann auch eine hydraulische Kolbenzylindereinheit für die Tragvorrichtung als Master in einer Master-Slave-Schaltung eingesetzt werden. Die Slave-Kolbeneinheit würde also in Abhängigkeit zur Master-Einheit mit einem Energieträger beaufschlagt, beispielsweise einer Hydraulikflüssigkeit. Durch den Einsatz einer derartigen Schaltung wird verhindert, dass inkompatible Einstellungen von Tragvorrichtung und Stabilisierungsvorrichtung vorgenommen werden.

**Bezugszeichenliste:**

| | |
|---|---|
| 1. Zugmaschine | **a** - Abstand der Zugmaschinenfront zur Hinterachse |
| 2. Heuwerbungsmaschine | |
| 3. Dreipunkt-Hubvorrichtung | **b** - Abstand des Schwerpunktes der Heuwerbungsmaschine zur Hinterachse |
| 4. Oberlenker | |
| 5. Unterlenker | **f** - Frontachse |
| 6. Anbauvorrichtung | **h** - Hinterachse |
| 7. Schwenklager | |
| 8. Tragvorrichtung | **F** - Fahrtrichtung |
| 9. Tragelement (Anbaubock) | |
| 10. Tragelement (Maschinenrahmen) | |
| | |
| 11. Stabilisierungselement | |
| 12. Maschinenrahmen | |
| 13. Schelle | |
| 14. Arbeitseinheit | |
| 15. Abstützvorrichtung | |
| 16. Zinken | |
| 17. Zinkenträger | |
| 18. Einstellungselement | |
| 19. Kraftspeicher | |
| 20. Schutzeinrichtung | |

Nachfolgend wird eine bevorzugte Ausführungsform der Erfindung anhand einiger Zeichnungen beschrieben. Die Zeichnungen zeigen;
**Fig. 1****:** eine Seitenansicht einer Kombination aus einer Zugmaschine und einer Heuwerbungsmaschine gemäß Anspruch 1 zur Verdeutlichung der wirkenden Hebelkräfte;
**Fig. 2****:** eine perspektivische Ansicht einer Heuwerbungsmaschine mit Stabilisierungselementen und einer Tragvorrichtung, welche in seiner Länge veränderlich ausgebildet ist;
**Fig. 3****:** eine Draufsicht einer Heuwerbungsmaschine mit vollkommen eingefahrenen Stabilisierungselementen und längenveränderlichen Rahmen;
**Fig. 4****:** eine Draufsicht einer Heuwerbungsmaschine mit vollkommen ausgefahrenem Stabilisierungselementen und längenveränderlichen Rahmen;

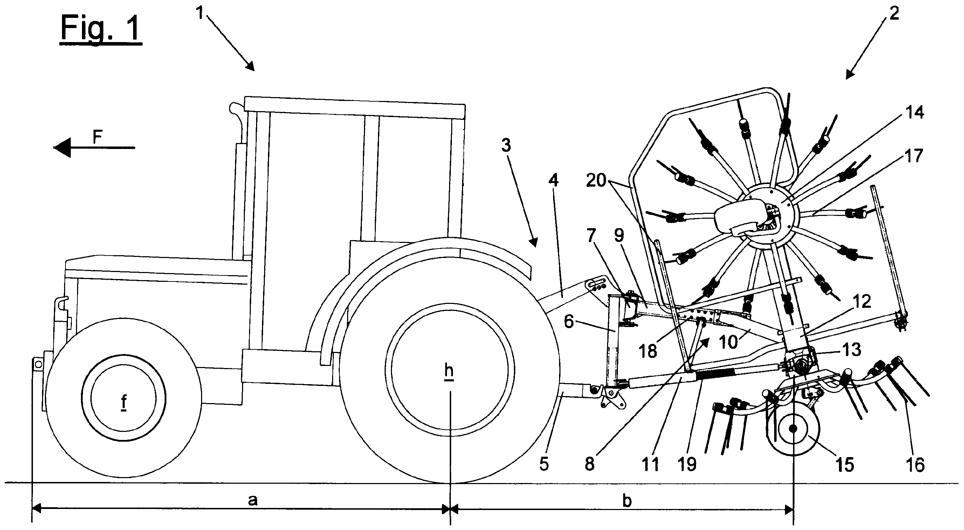

In der **Fig.1** ist eine, an einer Dreipunkt-Hubelnrlchtung 3 einer landwirtschaftlichen Zugmaschine 1 angebrachte Heuwerbungsmaschine 2 dargestellt. Bei der gezeigten Heuwerbungsmaschine 2 handelt es sich um einen Zettwender. Erkennbar wird dies durch die Ausführung der Zinkenträger 17 und der Anzahl der Zinken 16. Die leicht überspitzte Darstellung verdeutlicht die Wirkung einer angebauten Heuwerbungsmaschine 2 auf die Zugmaschine 1, hinsichtlich der Vorderachse f der Zugmaschine 1. Dabei ist eine bevorzugte Ausführung der Heuwerbungsmaschine 2 zu sehen. Die Anbauvorrichtung 6 für die Dreipunkt-Hubvorrichtung 3 wird hierbei mittels einem Schwenklager 7 mit dem Tragelement 9 der Tragvorrichtung 8 verbunden. Das zweite Tragelement 10 der Tragvorrichtung 8 ist mit dem ersten Tragelement 9 über Einstellungselemente 18 lösbar verbunden. Im Anschluss an die Tragvorrichtung 8 folgt der Maschinenrahmen 12, welcher bevorzugt stoffschlüssig mit dem Tragelement 10 verbunden ist. Um die Handhabung auf dem Feld zu erleichtern, verfügt die Heuwerbungsmaschine 2 über Stabilisierungselemente 11, welche die Heuwerbungmaschine 2 durch Kraftspeicher 19, wie den dargestellten mechanischen Federn in etwa der Fahrspur der Zugmaschine 1 folgen lassen. Diese Stabilisierungselemente 11 sind horizontal schwenkbar an der Anbauvorrichtung 6 angelenkt und werden oft durch Laschen im Maschinenrahmen 12 oder, wie in den Figuren **Fig. 1** bis **Fig. 4** erkennbar, durch den Einsatz von Schellen 13 lösbar mit dem Maschinenrahmen 12 verbunden. Der Maschinenrahmen 12 kann dabei, je nach Heuwerbungsmaschine 2, aus mehreren Elementen bestehen, was besonders bei Zettwendem die Regel ist. An dem Maschinenrahmen 12 sind die Arbeitseinheiten 14 rotierend antreibbar angebracht und werden in der Regel von Abstützvorrichtungen 15, wie den in den Figuren erkennbaren Tasträdern auf dem Boden abgestützt. Je nach Ausführung der Arbeitseinheit 14 und der Zinkenträger 17 können die aus Arbeitseinheiten 14 und Zinkenträger 17 inklusive Zinken 16 gebildeten Radien variieren. Dadurch können die Durchmesser der so zusammengesetzten Arbeitskreisel von etwas mehr als einem Meter bis zu zwei Metern betragen. Passend zu diesen Durchmessern müssen die Arbeitseinheiten 14 von einer Schutzeinrichtung 20 umgeben werden, um mögliche Verletzungsrisiken zu minimieren.

Speziell in der **Fig. 1** dargestellten Transportstellung der Heuwerbungsmaschine 2 lässt sich eine Entlastung der Vorderachse f durch die Gewichtskraft der Heuwerbungsmaschine 2 nachvollziehen. Der Schwerpunkt der Heuwerbungsmaschine 2 liegt etwa mit dem Abstand b von der Hinterachse h der Zugmaschine 1 entfernt. Die Hinterachse h bildet also die Drehachse eines Hebels, an dem die Gewichtskraft der Heuwerbungsmaschine 2 angreift. Der zweite Hebelarm wird folglich ausgehend von der Drehachse, also der Hinterachse h der Zugmaschine 1, in Fahrtrichtung F über die Frontachse f hinaus bis zum vorderen Ende der Zugmaschine 1 durch den Abstand a und das Gewicht des vorderen Bereichs der Zugmaschine 1 beschrieben. Hierbei ist zu beachten, dass die dargestellte Heuwerbungsmaschine 2 zu demonstrativen Zwecken nicht näher an die Anbauvorrichtung 6 gezeichnet worden ist. Dadurch ähnelt die gezeigte Kombination aus Zugmaschine 1 und Heuwerbungsmaschine 2 eher einem bisher üblichen Aufbau. Bei genauerem Betrachten fällt jedoch auf, dass das Tragelement 9 Einstellungselemente 18 in Form von Bohrungen aufweist, welche mit gleich beanstandeten Einstellungselementen 18 im Tragelement 10 in Übereinkunft gebracht werden können. Durch diese Bohrungen können die beiden Tragelemente 9 und 10 lösbar miteinander verbunden werden, beispielsweise durch den Einsatz von Schraubverbindungen oder Steckbolzen. Wird die Verbindung der Tragelemente 9 und 10 vorrübergehend gelöst, lässt sich das Tragelement 10 durch das als Schiene fungierende Tragelement 9 weiter in Fahrtrichtung F verschieben. Daraus resultiert eine signifikante Verbesserung der Fahreigenschaften. Denn durch die Verringerung des Abstand b vom Schwerpunkt der Heuwerbungsmaschine 2 zur Hinterachse h wird die Frontachse f stärker belastet, was wiederrum die Lenkbarkeit der Maschinenkombination verbessert.

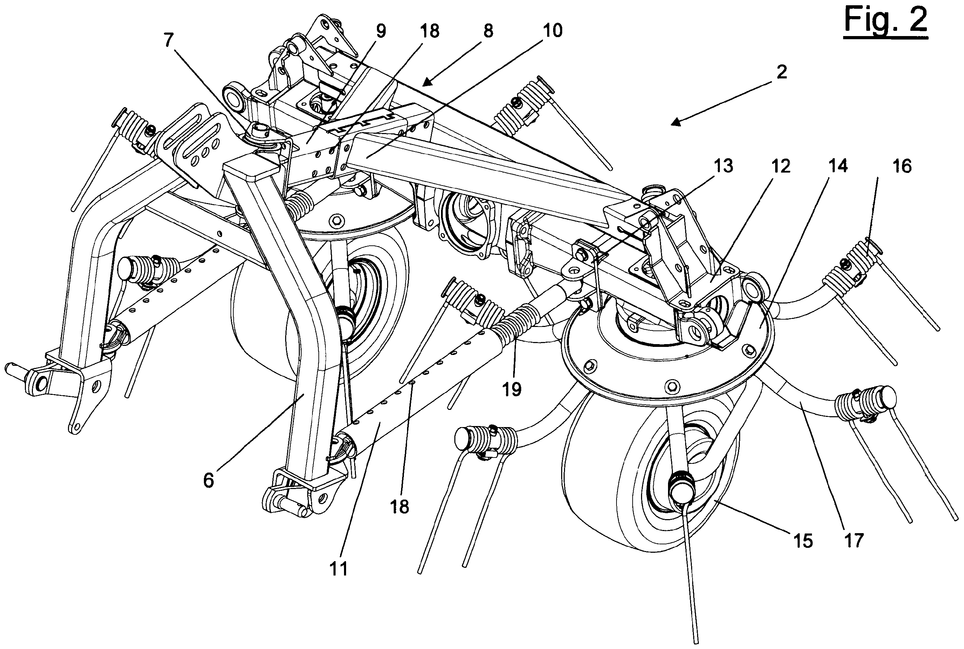

Die **Fig. 2** zeigt eine perspektivische Ansicht einer Heuwerbungsmaschine 2 gemäß der Erfindung. Das Schwenklager 7, welches das Tragelement 9 mit der Anbauvorrichtung 6 verbindet, ist ebenso zu erkennen, wie der an der Tragvorrichtung 8 befindliche Maschinenrahmen 12. Gut sichtbar sind auch die ineinandergreifenden Tragelemente 9 und 10 der Tragvorrichtung 8, sowie die verschiedenen Einstellungselemente 18 an beiden Tragelementen 9 und 10, sowie den Stabilisierungselementen 11. Darüber hinaus sind die Kraftspeicher 19 der Stabilisierungselemente 11 gut zu erkennen, in diesem Beispiel als mechanische Federn ausgebildet. Diese Anordnung wird eingesetzt, um eine bessere Spurführung auf dem Feld zu ermöglichen. Zum Transport wird durch die Dreipunkt-Hubvorrichtung 3 die Anbauvorrichtung 6 derart angehoben, dass die Kraftspeicher 19 durch das Gewicht der Arbeitseinheiten 14 und des Maschinenrahmens 12 vollkommen eingeschoben werden, sodass eine sichere Lage bei Straßenfahrten erreicht wird. An dem Maschinenrahmen 12 sind die Arbeitseinheiten 14 mit ihren Abstützvorrichtungen 15 zu sehen, die als aus dem Stand der Technik bekannte Tasträder ausgeführt sind. Erneut wird durch die an den Arbeitseinheiten 14 befindlichen kurzen Zinkenträger 17 mit Zinken 16 erkennbar, dass es sich bei der dargestellten Heuwerbungsmaschine 2 um einen Zettwender handelt. Die Arbeitseinheiten 14 eines Zettwenders wie in Fig. 2 zu erkennen, werden dabei in der Regel mit einen hohen Drehzahl rotierend angetrieben, wodurch die Zinken 16 das Erntegut zunächst aufnehmen, aber aufgrund der hohen Zentrifugalkraft nicht halten können und somit hinter der Aufnahmestelle wieder verlieren, sodass das Emtegut nach der Aufnahme breit und gleichmäßig auf dem Feld verteilt wird.

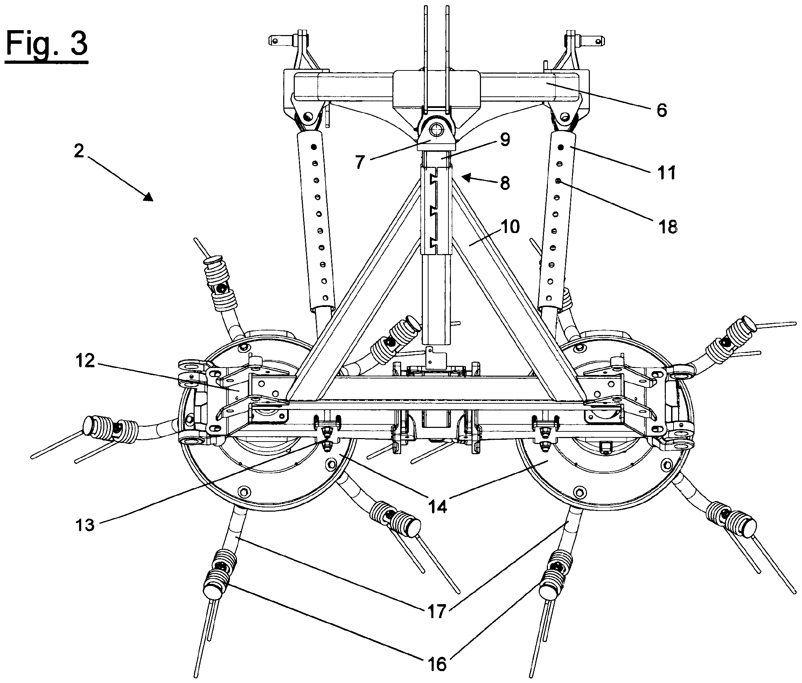

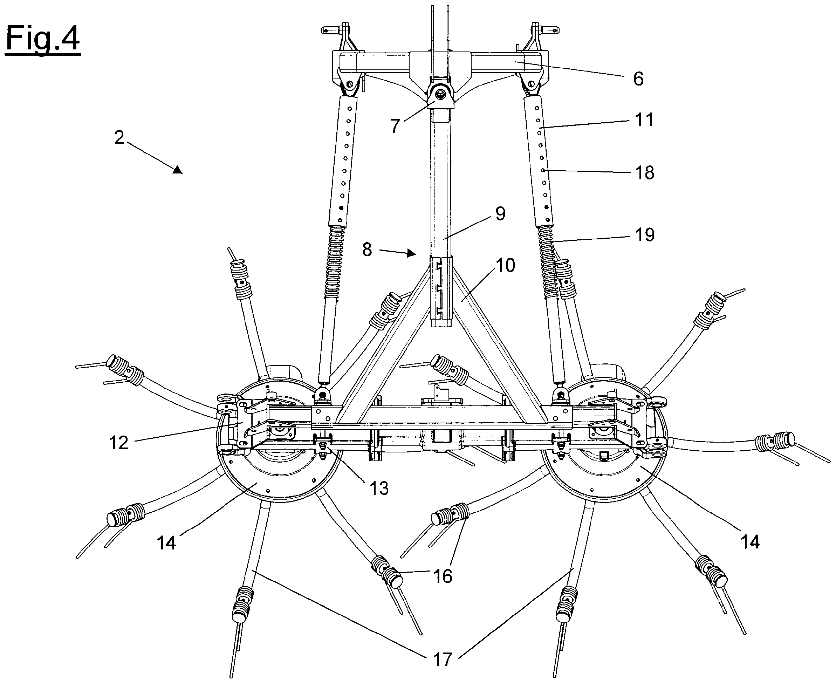

Die Figuren **Fig. 3** und **Fig. 4** zeigen je eine Heuwerbungsmaschine 2 in einer direkten Ansicht von oben. Dabei ist zu erkennen, dass es sich um Heuwerbungsmaschinen 2 desselben Typs handelt. In beiden Beispielen sind Zettwender zu erkennen. Jedoch unterscheiden sich die Arbeitseinheiten 14 und die Zinkenträger 17 maßgeblich. Die längeren Zinkenträger 17 bewirken logischerweise einen vergrößerten Radius der Arbeitseinheit 14, wie in der **Fig. 4** deutlich wird. Zur Verdeutlichung der Anpassungsfähigkeit der Tragvorrichtung 8 sind entsprechend der verschiedenen, dargestellten Radien der Arbeitseinheiten 14 die Tragvorrichtung 8 und die Stabilisierungselemente 11 in ihrer Länge angepasst worden. Weiterhin wird hierbei deutlich, dass die Heuwerbungsmaschinen 2 wie in den Figuren **Fig. 3** und **Fig. 4** grundsätzlich nach einem Baukastensystem gefertigt werden können. Maschinenrahmen 12, Tragvorrichtung 8 und die beiden gezeigten, beispielhaften Ausführungen der Tragelemente 9 und 10 sind in beiden Figuren identisch. Dabei sind in den Figuren verschiedene Anlenkpunkte für die Stabilisierungselemente 11 zu sehen. Diese sind jedoch leicht in einen baugleichen Maschinenrahmen 12 einzuarbeiten oder, wie in den gezeigten Beispielen, durch Schellen 13 oder ähnliche Maschinenelemente anbringbar.

## Patentansprüche

1. Heuwerbungsmaschine (2) mit zumindest einer rotierend antreibbaren, an einem Maschinenrahmen (12) gehalterten Arbeitseinheit (14) mit daran befindlichen, Erntegut bearbeitenden Zinken (16), einer die Arbeitseinheit (14) zumindest teilweise umgebenden Schutzeinrichtung (20), wenigstens einer Abstützvorrichtung (15) zum Abstützen der zumindest einen Arbeitseinheit (14) auf dem Boden, einer Anbauvorrichtung (6) zur Verbindung mit dem Oberlenker und den Unterlenkern einer Dreipunkt-Hubvorrichtung (3) einer landwirtschaftlichen Zugmaschine (1) und wenigstens ein, sich von der Anbauvorrichtung (6) bis zum Maschinenrahmen (12) erstreckendes, in und entgegen der Fahrtrichtung (F) längenveränderliches Rahmenelement, **dadurch gekennzeichnet, dass** es sich bei dem längenveränderlichen Rahmenelement der Heuwerbungsmaschine (2) um eine mit der Anbauvorrichtung (6) und dem Maschinenrahmen (12) verbundene Tragvorrichtung (8) handelt und die Tragvorrichtung (8) aus zumindest zwei miteinander verbindbaren Tragelementen (9, 10) gebildet ist, welche in zumindest zwei verschiedenen Positionen durch zumindest eine lösbare Verbindung fixierbar sind.

2. Heuwerbungsmaschine (2) nach Anspruch 1, **dadurch gekennzeichnet, dass** die Tragvorrichtung (8) schwenkbar mit der Anbauvorrichtung (6) verbunden ist.

3. Heuwerbungsmaschine (2) nach Anspruch 1 oder 2, **dadurch gekennzeichnet, dass** die Tragelemente (9, 10) der Tragvorrichtung (8) teleskopisch ineinander schiebbar ausgeführt sind.

4. Heuwerbungsmaschine (2) nach zumindest einem der Ansprüche 1 bis 3, **dadurch gekennzeichnet, dass** die Längenveränderung der Tragvorrichtung (8) durch wenigstens einen fremdkraftbetätigten Aktor ausgeführt wird.

5. Heuwerbungsmaschine (2) nach zumindest einem der Ansprüche 1 bis 4, **dadurch gekennzeichnet, dass** die Fixierung der wenigstens zwei Tragelemente (9, 10) zueinander durch wenigstens einen fremdkraftbetätigten Aktor ausgeführt wird.

6. Heuwerbungsmaschine (2) nach zumindest einem der vorhergehenden Ansprüche, **dadurch gekennzeichnet, dass** der Tragvorrichtung (8) zumindest ein Stabilisierungselement (11) mit zumindest einem Kraftspeicher (19) zugeordnet ist.

7. Heuwerbungsmaschine (2) nach Anspruch 6, **dadurch gekennzeichnet, dass** das Stabilisierungselement (11) abhängig von der eingestellten Länge der Tragvorrichtung (8), in seiner Länge anpassbar ausgeführt ist.

8. Heuwerbungsmaschine (2) nach Anspruch 6 oder 7, **dadurch gekennzeichnet, dass** das Stabilisierungselement (11) durch den Einsatz wenigstens eines Zwischenelementes in seiner Länge anpassbar ist.

9. Heuwerbungsmaschine (2) nach Anspruch 1, **dadurch gekennzeichnet, dass** die Schutzeinrichtung (20) zumindest in einem Bereich nahe der Bereifung einer Zugmaschine flexibel ausgebildet ist.

## Claims

1. Haymaking machine (2) comprising at least one rotationally drivable work unit (14) which has crop-processing tines (16) located thereon and is mounted on a machine frame (12), comprising a protective apparatus (20) at least partially surrounding the work unit (14), comprising at least one support device (15) for supporting the at least one work unit (14) on the ground, comprising an attachment device (6) for connecting to the upper link arm and the lower link arms of a three-point lifting device (3) of an agricultural tractor (1) and comprising at least one frame element which extends from the attachment device (6) as far as the machine frame (12) and is adjustable in length in and counter to the direction of travel (F), **characterised in that** the length-adjustable frame element of the haymaking machine (2) is a carrying device (8) connected to the attachment device (6) and the machine frame (12), and the carrying device (8) is made up of at least two interconnectable carrying elements (9, 10), which can be secured in at least two different positions by means at least one releasable connection.

2. Haymaking machine (2) according to claim 1, **characterised in that** the carrying device (8) is pivotally connected to the attachment device (6).

3. Haymaking machine (2) according to either claim 1 or claim 2, **characterised in that** the carrying elements (9, 10) of the carrying device (8) can be telescopically slid into one another.

4. Haymaking machine (2) according to at least one of claims 1 to 3, **characterised in that** the length of the carrying device (8) is adjusted by means of at least one externally powered actuator.

5. Haymaking machine (2) according to at least one of claims 1 to 4, **characterised in that** the at least two carrying elements (9, 10) are secured to one another by means of at least one externally powered actuator.

6. Haymaking machine (2) according to at least one of the preceding claims, **characterised in that** the carrying device (8) is associated with at least one stabilising element (11) having at least one energy storing device (19).

7. Haymaking machine (2) according to claim 6, **characterised in that** the length of the stabilising element (11) can be adapted on the basis of the set length of the carrying device (8).

8. Haymaking machine (2) according to either claim 6 or claim 7, **characterised in that** the length of the stabilising element (11) can be adapted by using at least one intermediate element.

9. Haymaking machine (2) according to claim 1, **characterised in that** the protective apparatus (20) is flexible at least in a region near the tyres of a tractor.

## Revendications

1. Machine de fenaison (2) comportant au moins une unité de travail (14) portée par un châssis (12) et entraînée en rotation, comportant des dents (16) pour travailler le produit de récolte, un dispositif de protection (20) entourant au moins en partie l'unité de travail (14), au moins un dispositif d'appui (15) pour soutenir l'unité de travail (14) sur le sol, un dispositif d'attelage (6) pour être relié au bras supérieur et aux bras inférieurs d'un dispositif d'attelage et de levage en trois points (3) d'un tracteur agricole (1) et au moins un élément de cadre allant du dispositif d'attelage (6) vers le châssis (12) de la machine et de longueur réglable dans la direction de déplacement (F) et dans la direction opposée,
**caractérisée en ce que**
l'élément de cadre, de longueur réglable de la machine de fenaison (2), est un dispositif de support (8) relié au dispositif d'attelage (6) et au châssis (12) de la machine et le dispositif de support (8) est formé d'au moins deux éléments de support (9, 10) reliés l'un à l'autre, ces éléments pouvant être fixés dans au moins deux positions différentes par au moins une liaison amovible.

2. Machine de fenaison (2) selon la revendication 1,
**caractérisée en ce que**
le dispositif de support (8) est relié de manière pivotante au dispositif d'attelage (6).

3. Machine de fenaison (2) selon la revendication 1 ou 2,
**caractérisée en ce que**
les éléments de support (9, 10) du dispositif de support (8) coulissent l'un par rapport à l'autre de manière télescopique.

4. Machine de fenaison (2) selon l'une des revendications 1 à 3,
**caractérisée en ce que**
la variation de longueur du dispositif de support (8) est réalisée par au moins un actionneur commandé par une force extérieure.

5. Machine de fenaison (2) selon au moins l'une des revendications 1 à 4,
**caractérisée en ce que**
la fixation d'au moins deux éléments de support (9, 10) l'un par rapport à l'autre est faite par au moins un actionneur à commande extérieure.

6. Machine de fenaison (2) selon l'une des revendications précédentes,
**caractérisée en ce que**
le dispositif de support (8) comporte au moins un élément de stabilisation (11) ayant au moins un accumulateur de force (19).

7. Machine de fenaison (2) selon la revendication 6,
**caractérisée en ce que**
la longueur de l'élément de stabilisation (11) est adaptable en fonction de la longueur réglée du dispositif de support (8).

8. Machine de fenaison (2) selon la revendication 6 ou 7,
**caractérisée en ce que**
la longueur de l'élément de stabilisation (11) s'adapte à l'aide d'au moins un élément intermédiaire.

9. Machine de fenaison (2) selon la revendication 1,
**caractérisée en ce que**
l'installation de protection (20) est réalisée de manière flexible au moins dans une zone proche des pneus du tracteur.
